# EUROPEAN PATENT SPECIFICATION

(11) **EP 1 446 039 B1**
(45) Date of publication and mention of the grant of the patent: **25.05.2005**
(21) Application number: 02791126.2
(22) Date of filing: 20.11.2002
(51) Int. Cl.: A47J 37/12

(54) **DEEP FAT FRYER**
FRITIERGERÄT
FRITEUSE

(30) Priority: 20.11.2001 SE 0103843
(43) Date of publication of application: 18.08.2004
(73) Proprietor: Aktiebolaget SKF, 415 50 Göteborg (SE)
(72) Inventor: Falk, Johan, 431 64 Mölndal (SE)
(74) Representative: Kraenzmer, Martin
(86) International application number: PCT/SE2002/002112
(87) International publication number: WO 2003/061444

(56) References cited:
- US-A- 3 722 401
- US-A- 4 187 771
- US-A- 5 142 968

## Description

The invention in question concerns a deep fat food fryer. The deep fat fryer includes a container for the oil.

Furthermore, the invention in question refers to a procedure for deep frying food.

### Technical background

Deep fat fryers of the kind specified in the introduction are well-known. They are mainly to be found in fast food restaurants and are primarily used for frying chips. Other foods, such as onion rings, can also be deep fried. A large quantity of chips is normally poured into a wire basket which is then lowered into the cooking oil. After a given time, the contents of the basket can be removed and portioned out. One problem with the traditional deep frying method is that the food must be supervised in order to prevent over-frying or under-frying. However, solutions exist where the wire basket is suspended on an electrically controlled lift so that the basket is automatically lifted out of the oil after a set time. Such an automated deep fat fryer is disclosed in document US-A-5142968.

As relatively large quantities of food are deep fried at the same time, it is also necessary for the wire basket to be shaken from time to time to mix the food. Failure to do so will result in the food in the middle of the basket not being cooked as well as the food at the sides. This shaking, which is not always carried out, is also insufficient to allow adequate redistribution of the food. In addition, the time required for deep frying is relatively long and this is particularly noticeable in fast food restaurants.

### Summary of the invention

The purpose of the invention in question is to eliminate the above problems as well as to provide a deep fat fryer with additional advantages.

This can be achieved through an appliance and a process that demonstrate the distinctive features indicated in independent claims 1 and 9.

The innovative deep fat fryer utilises a track conveyor for continual deep frying of food, where the track conveyor is adapted to convey the food through the oil in the container. A deep fat fryer with a conveyor is disclosed in document US-A-4 187 771. A major advantage with this solution is that, in this way, the food is spread out along a track allowing it to be deep fried continually, before being automatically removed from the oil when the deep frying process has been completed. Consequently, there is also the advantage that the food looks after itself, so to speak, and does not need to be supervised. For example, the frozen food can be loaded into a large container which continually feeds food onto the track conveyor.

In order to dispense with yet another stage in the operation, it is necessary for the food to be divided into sections corresponding to the size of individual portions. This can be done using separator units which are ideally fitted to the moving track. In the event of the track sloping steeply or completely vertically, these separator units help to convey the food, thereby avoiding track stoppages. These separator units should ideally be perforated to allow the oil to flow through, while at the same time being sufficiently tightly meshed to prevent the food from falling through.

In order to reduce the time taken for deep frying, it is a good idea to fit a pump to circulate the oil. In the existing technology, the wire basket is lowered into a container of static oil. By circulating the oil, the deep frying time is consequently reduced as a result of increased convection, i.e. the transference of heat from the oil to the food.

In order to further reduce the time taken and to improve hygiene, a filter is ideally installed to filter the oil. Small particles which have broken away from the food are commonly found in the oil and may be deposited on subsequently deep fried items of food, insulating them and resulting in poorer heat transference. By filtering the oil, it will also become cleaner, i.e. more hygienic. To further improve hygiene, it is advisable for the track conveyor to be built in such a way that the only openings are for loading and unloading the food, thus preventing anything else from accidentally falling into the oil.

A further improvement of the heat transference is achieved by allowing the oil to be sprayed directly onto the food, preferably along the whole length of the track conveyor. This can be achieved by perforating one of the track conveyor's side walls and applying pressure to the side of this wall facing away from the food. In this way, the oil flows through the perforations directly onto the food. Alternatively, the perforations can be designed to form nozzles to increase the speed of the oil.

According to the invention, the time taken can be reduced and the quality of the fried food improved by means of the track conveyor transporting the food to a depth of oil in excess of approximately 30 cm. The increased pressure results in quicker heat transference. It has been shown that a depth of around 80 cm is ideal. Naturally, it is possible to submerge the food to a greater depth, although at the expense of an increase in the size of the deep fat fryer.

When deep frying frozen food, a coat forms around the item of food, for example when the frozen water disappears immediately following submersion into the oil. It is consequently beneficial for the track conveyor to be adapted so that, during use, it initially conveys food at a starting depth in the oil along a flat trajectory, before taking the same food to a second depth, greater than the first depth, where the food is conveyed along a flat trajectory at this second depth. In this way, the water given off by the food is allowed to rise freely to the surface of the frying liquid. The food is then taken down to a greater depth for continued deep frying.

Changing the direction of the track conveyor at the same time as the track goes deeper into the oil ensures redistribution of the food.

### Brief description of figures

From now on, the invention will further described by means of a version example, with reference to enclosed figures.
Figure 1 is an overview of a currently submitted version of the deep fat fryer in accordance with the invention in question.
Figure 2 is an overview of a wall in the deep fat fryer in figure 1.
Figure 3 is an overview of the wall in figure 2 with transport channels.

### Description of submitted versions

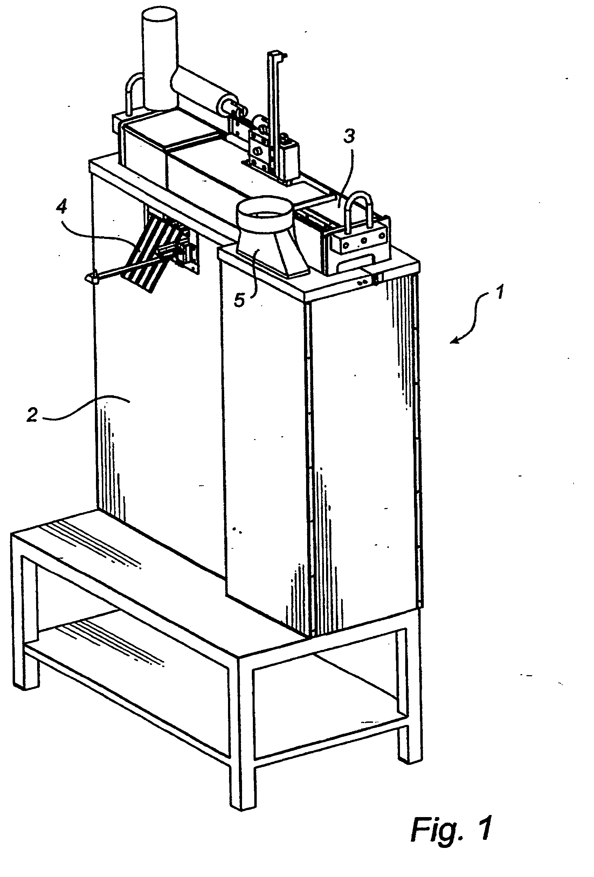

The deep fat fryer (1) in figure 1 includes a casing (2), a loading opening (3) and an unloading opening (4). In a submitted version of the deep fat fryer (1) in accordance with the invention in question, the entire deep frying process is enclosed for optimum hygiene. A further advantage of enclosing the process is a reduction in energy consumption, because the heat output resulting from evaporation is minimised as the total area of the oil in contact with air is minimal. A further consequence of the reduced evaporation is a reduction in the consumption of oil. The reduced contact between the oil and oxygen means that the lifetime of the oil is extended, which also means a saving on oil which would otherwise have to be replaced more frequently. Ideally, the oil is circulated in deep fat fryer (1) and is filtered in order further to improve product durability and hygiene.

In a submitted version of the deep fat fryer (1) in accordance with the invention in question, a device (5) is fitted to the deep fat fryer (1) for connection to an exhaust air duct (not shown). This solution results in a significantly improved working environment for those working with machine (1), in that they avoid having to work in the cooking fumes as is the case with traditional deep fat fryers.

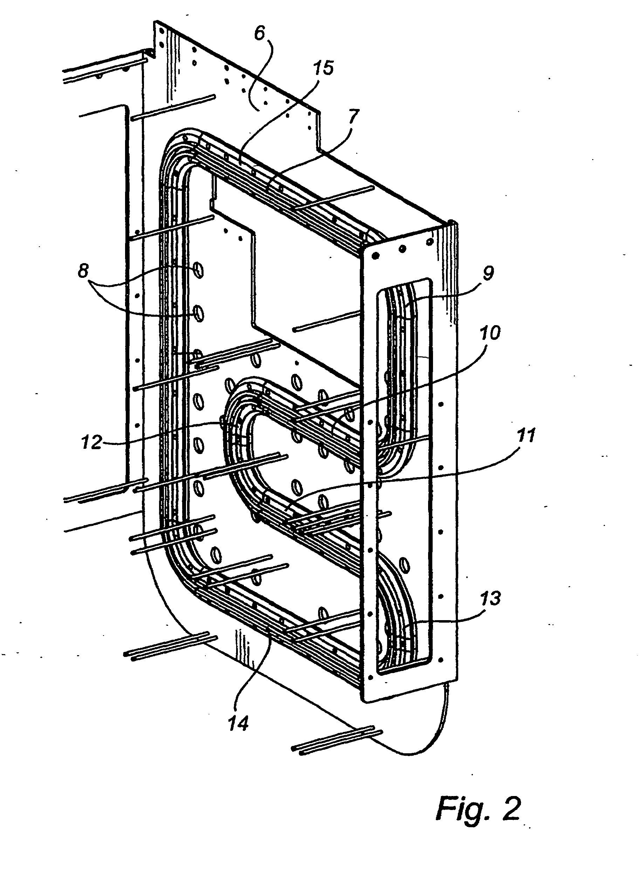

Figure 2 shows a wall (6) in the deep fat fryer (1). The wall (6) is fitted with a guide rail (7) that follows the track conveyor. In a submitted version of the wall (6) in accordance with the invention in question, the wall (6) is supplied with openings (8) which are spread out along the track conveyor. When using the deep fat fryer (1), the oil is pressurised on the side of the wall (6) facing away in figure 2. This pressurisation results in the oil being sprayed through openings (8) directly onto the food on the track conveyor.

During deep frying, food is conveyed into the track conveyor at a starting position (9) and the track conveyor takes the food down into the oil to an initial depth (10). At the indicated initial depth (10), the food is transported in a flat trajectory before being transported further down to a second depth (11) where the food is transported in a flat trajectory. The track conveyor also changes direction at transition (12) from the first depth (10) to the second depth (11), which means that the food is mixed. From second depth (11) the food is transported via a second transition (13) to a third depth (14) where the food is also transported along a flat trajectory. The food is then conveyed up above the oil so that the oil runs off before the food is unloaded from the track conveyor at a second position (15).

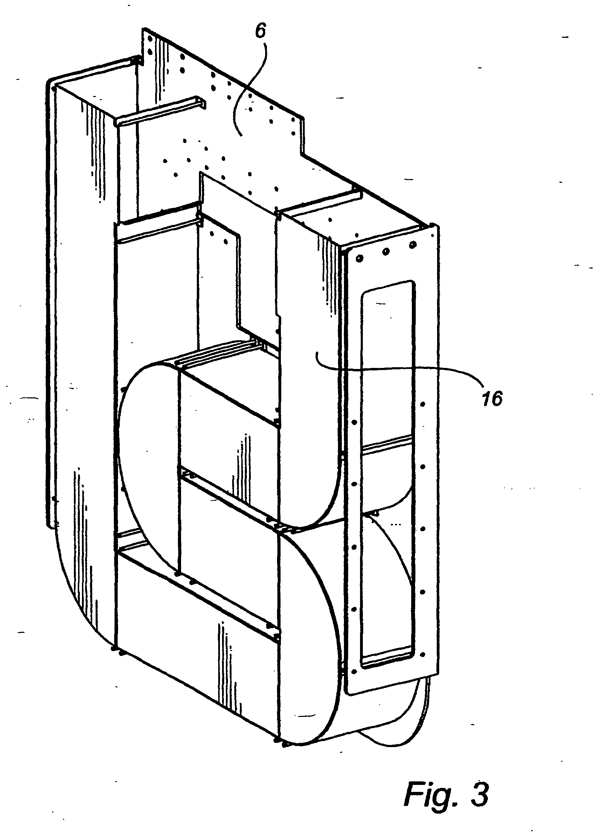

Figure 3 shows the wall (6) from figure 2 with the transport channel (16) drawn in. In a submitted version of the deep fat fryer in accordance with the invention in question, the separator units (not shown) are designed such that they can pass through the transport channel (16) and at the same time convey the food in portions through the entire transport channel (16).

It is realised that a number of modifications to the version of the invention described above are possible within the framework of the invention, as defined by the following patent requirements. As is described above, for example, the track conveyor can be arranged in a number of different ways. Furthermore, the openings (8) can be fitted with nozzles to optimise the oil's flow rate.

## Claims

1. Deep fat fryer (1) for deep frying food, including container for oil, a track conveyor for continual deep frying of food, wherein the track conveyor is arranged so that, when in use, it transports food through the oil in said container, which is **characterised by** the track conveyor being arranged so that it conveys the food to a depth of oil greater than 30 cm.

2. Deep fat fryer (1) in accordance with claim 1, in which the track conveyor includes at least one separator unit for dividing the food into portions.

3. Deep fat fryer (1) in accordance with claim 1, in which a pump is fitted to circulate the oil.

4. Deep fat fryer (1) in accordance with claim 1, in which a filter is fitted to filter the oil.

5. Deep fat fryer (1) in accordance with claim 1, in which at least one of the track conveyor's walls is supplied with openings (8) to spray the oil directly onto the food.

6. Deep fat fryer (1) in accordance with claim 1, in which the track conveyor is arranged so that, when in use, it conveys food to a depth of oil of around 80 cm.

7. Deep fat fryer (1) in accordance with claim 1, in which the track conveyor is arranged so that, when in use, it initially conveys food to a first depth (10) in the oil along a flat trajectory, before transporting the same food to a second depth (11, 14), where the second depth (11, 14) is greater than the first depth (10), where the food is conveyed along a flat trajectory at the indicated second depth (11, 14).

8. Deep fat fryer (1) in accordance with claim 7, in which the track conveyor is arranged so that there is a change of direction (12, 13) when changing the depth of the track in order to mix the food.

9. Process for deep frying food, including the stage where the food is conveyed along a track in the oil to a depth of oil greater than 30 cm.

10. Process in accordance with claim 9, also including the stage where the food is divided into portions.

11. Process in accordance with claim 9, also including the stage where the food is conveyed to a depth of oil of around 80 cm.

12. Process in accordance with claim 9, also including the stage where the food is initially conveyed to a first depth (10) in the oil and then to a second depth (11, 14) in the oil, where the second depth (11, 14) is greater than the indicated first depth (10).

13. Process in accordance with claim 9, in which the food is conveyed along a track, where the part of the track submerged in the oil is fitted with side walls, where at least one of the side walls (6) has openings (8) through which oil is sprayed onto the food.

## Patentansprüche

1. Friteuse (1) zum Frittieren von Lebensmitteln, die einen Behälter für Öl und einen Bahnförderer zum kontinuierlichen Frittieren von Lebensmitteln aufweist, wobei der Bahnförderer so angeordnet ist, dass er bei Gebrauch Lebensmittel durch das Öl in dem Behälter transportiert, die **dadurch gekennzeichnet ist, dass** der Bahnförderer so angeordnet ist, dass er die Lebensmittel zu einer Öltiefe von mehr als 30 cm befördert.

2. Friteuse (1) nach Anspruch 1, **dadurch gekennzeichnet, dass** der Bahnförderer mindestens eine Separatoreinheit zum Teilen der Lebensmittel in Portionen aufweist.

3. Friteuse (1) nach Anspruch 1, **dadurch gekennzeichnet, dass** eine Pumpe eingebaut ist, um das Öl umzuwälzen.

4. Friteuse (1) nach Anspruch 1, **dadurch gekennzeichnet, dass** ein Filter eingebaut ist, um das Öl zu filtern.

5. Friteuse (1) nach Anspruch 1, **dadurch gekennzeichnet, dass** mindestens eine der Wände des Bahnförderers mit Öffnungen (8) versehen ist, um das Öl direkt auf die Lebensmittel zu sprühen.

6. Friteuse (1) nach Anspruch 1, **dadurch gekennzeichnet, dass** der Bahnförderer so angeordnet ist, dass er bei Gebrauch Lebensmittel zu einer Öltiefe von etwa 80 cm befördert.

7. Friteuse (1) nach Anspruch 1, **dadurch gekennzeichnet, dass** der Bahnförderer so angeordnet ist, dass er bei Gebrauch Lebensmittel anfangs zu einer ersten Tiefe (10) in dem Öl entlang einer Flachbahn befördert, bevor er diese Lebensmittel zu einer zweiten Tiefe (11, 14) befördert, wobei die zweite Tiefe (11, 14) größer als die erste Tiefe (10) ist, wobei die Lebensmittel entlang einer Flachbahn in der angegebenen zweiten Tiefe (11, 14) befördert werden.

8. Friteuse (1) nach Anspruch 7, **dadurch gekennzeichnet, dass** der Bahnförderer so angeordnet ist, dass es eine Richtungsänderung (12, 13) gibt, wenn die Tiefe der Bahn geändert wird, um die Lebensmittel zu vermengen.

9. Verfahren zum Frittieren von Lebensmitteln, das den Schritt aufweist, in dem die Lebensmittel entlang einer Bahn in dem Öl zu einer Öltiefe von mehr als 30 cm befördert werden.

10. Verfahren nach Anspruch 9, das weiterhin den Schritt aufweist, in dem die Lebensmittel in Portionen geteilt werden.

11. Verfahren nach Anspruch 9, das weiterhin den Schritt aufweist, in dem die Lebensmittel zu einer Öltiefe von etwa 80 cm befördert werden.

12. Verfahren nach Anspruch 9, das weiterhin den Schritt aufweist, in dem die Lebensmittel anfangs zu einer ersten Tiefe (10) in dem Öl und dann zu einer zweiten Tiefe (11, 14) in dem Öl befördert werden, wobei die zweite Tiefe (11, 14) größer als die angegebene erste Tiefe (10) ist.

13. Verfahren nach Anspruch 9, **dadurch gekennzeichnet, dass** die Lebensmittel entlang einer Bahn befördert werden, wobei der Teil der Bahn, der in das Öl getaucht ist, mit Seitenwänden versehen ist, wobei mindestens eine der Seitenwände (6) Öffnungen (8) hat, durch die Öl auf die Lebensmittel gesprüht wird.

## Revendications

1. Friteuse (1) pour frire des aliments, incluant un conteneur pour l'huile, un convoyeur à canal pour la friture en continu des aliments, dans laquelle le convoyeur à canal est conçu de sorte que, lorsqu'en utilisation, il transporte des aliments à travers l'huile dans ledit conteneur, laquelle est **caractérisée par** le convoyeur à canal étant conçu de sorte qu'il transporte les aliments à une profondeur d'huile plus grande que 30 cm.

2. Friteuse (1) selon la revendication dans 1, dans laquelle le convoyeur à canal inclut au moins une unité de séparation pour diviser les aliments en parties.

3. Friteuse (1) selon la revendication 1, dans laquelle une pompe est ajustée pour faire circuler l'huile.

4. Friteuse (1) selon la revendication 1, dans laquelle un filtre est ajusté pour filtrer l'huile.

5. Friteuse (1) selon la revendication 1, dans laquelle au moins une des parois du convoyeur à canal est munie d'ouvertures (8) pour pulvériser l'huile directement sur les aliments.

6. Friteuse (1) selon la revendication 1, dans laquelle le convoyeur à canal est conçu de sorte que, lorsqu'en utilisation, il transporte des aliments à une profondeur d'huile d'environ 80 cm.

7. Friteuse (1) selon la revendication 1, dans laquelle le convoyeur à canal est conçu de sorte que, lorsqu'en utilisation, il transporte initialement les aliments à une première profondeur (10) dans l'huile le long d'une trajectoire plate, avant de transporter les mêmes aliments à une seconde profondeur (11, 14) où la seconde profondeur (11, 14) est plus grande que la première profondeur (10), où les aliments sont transportés le long d'une trajectoire plate à la seconde profondeur indiquée (11, 14).

8. Friteuse (1) selon la revendication 7, dans laquelle le convoyeur à canal est conçu de sorte qu'il existe un changement de direction (12, 13) lorsque l'on change la profondeur du canal afin de mélanger les aliments.

9. Procédé pour frire des aliments, incluant l'étape où les aliments sont transportés le long d'un canal dans l'huile à une profondeur d'huile plus grande que 30 cm.

10. Procédé selon la revendication 9, incluant également l'étape où les aliments sont divisés en parties.

11. Procédé selon la revendication 9, incluant également l'étape où les aliments sont transportés à une profondeur d'huile d'environ 80 cm.

12. Procédé selon la revendication 9, incluant également l'étape où les aliments sont initialement transportés à une première profondeur (10) dans l'huile et ensuite à une seconde profondeur (11, 14) dans l'huile, où la seconde profondeur (11, 14) est plus grande que la première profondeur (10) indiquée.

13. Procédé selon la revendication 9, dans lequel les éléments sont transportés le long d'un canal, où la partie du canal immergée dans l'huile est ajustée avec les parois latérales, où au moins une des parois latérales (6) comporte des ouvertures (8) à travers lesquelles l'huile est pulvérisée sur les aliments.
